# EUROPEAN PATENT SPECIFICATION

(11) **EP 3 925 830 B1**
(45) Date of publication and mention of the grant of the patent: **05.04.2023**
(21) Application number: 21179236.1
(22) Date of filing: 14.06.2021
(51) Int. Cl.: B60R 11/04, B60R 11/00

(54) **PORTABLE ALPR DEVICE**
TRAGBARE ALPR-VORRICHTUNG
DISPOSITIF ALPR PORTABLE

(30) Priority: 19.06.2020 ES 202030598
(43) Date of publication of application: 22.12.2021
(73) Proprietor: Federal Signal Vama, S.A.U., 08339 Vilassar de Dalt (Barcelona) (ES)
(72) Inventor: RAMÓN ARRUFAT, Xavier, 08339 Vilassar De Dalt (Barcelona) (ES)
(74) Representative: Ungria López, Javier

(56) References cited:
- ES-U- 1 213 764
- ES-U- 1 246 804
- US-A1- 2004 119 881
- US-A1- 2008 011 435
- US-B1- 8 811 812

## Description

### Object of the invention

The object of the invention is a portable ALPR device which can be temporarily mounted mainly on the roof or hood of a vehicle. ALPR devices (known as Automatic License Plate Recognition devices or simply ALPR) are used to read the license plates of vehicles. Since ALPR devices are highly sensitive to the reading angle, the inclination of the device must be suitably adjusted according to the vehicle on which the ALPR device is mounted.

The objective is therefore to provide a portable ALPR device which can be temporarily mounted on any vehicle, with means allowing the device to be inclined so that license plates can be read correctly, and so that interaction with the vehicle or the user thereof can furthermore be carried out in a wired or wireless manner. Additionally, the functionality of the portable ALPR device can be increased with video cameras which record the surroundings of the vehicle carrying the portable ALPR device.

### Technical Field of the Invention

The technical field to which the present invention belongs is the field of electronic devices for reading license plates of vehicles and recording the surroundings of the portable ALPR device.

### Background of the Invention

Portable ALPR devices are not known in the state of the art, only fixed ALPR devices are known. ES 1 246 804 U discloses an autonomous and multifunctional luminous device for priority vehicles having an integrated ALPR device.

This is due to the fact that ALPR devices must have an inclination to enable reading the license plates of vehicles in the surroundings of the vehicle carrying the ALPR device, which implies the internal handling of the ALPR device. Additionally, if the inclination goes above 30 degrees, the aerodynamic resistance of the ALPR device is very high such that temporary mounting of the ALPR devices can be ruled out.

Furthermore, the interconnection of the ALPR device with the user thereof, as well as the power supply of the ALPR device itself, mean a permanent connection to the vehicle.

It would therefore be desirable to find a solution to the problem of the state of the art in which an ALPR device can be temporarily mounted on a vehicle.

### Description of the Invention

As mentioned above, the limiting factor to make any ALPR device portable (or portative) and universal lies in the way to provide, on one hand, data communication and power supply, and on the other, inclination of the ALPR cameras to enable reading license plates, regardless of the type of vehicle, the height thereof, and the inclination required for correctly reading license plates.

The present invention solves the above cited problem by providing a portable ALPR device which can have wired data communication and power supply, or alternatively, wireless communication and internal power supply by means of a battery. With respect to the inclination required for correctly reading license plates, the portable ALPR device of the present invention has a system for inclining the device as a whole and another separate and independent system for inclining the cameras, regardless of whether they are ALPR cameras or video cameras. Therefore, the inclination required for correctly reading license plates can be carried out by means of inclining the fixing system for fixing the device to the vehicle, only the cameras (ALPR and video), and a combination of both (device-vehicle fixing system and camera-device fixing system).

Therefore, a first aspect of the present invention discloses a portable ALPR device. The portable ALPR device comprises:
- a base;
- two ALPR cameras;
- an ALPR camera support with adjustable inclination fixing the ALPR cameras to the base;
- a concentrator connected to at least the ALPR cameras;
- communication means connected to the concentrator;
- power supply means connected to the concentrator;
- a protective casing on the front portion of the device, fixed to the base for internally covering at least the ALPR cameras and the concentrator;
- a handle fixed to the base and located on the outer rear portion of the device;
- a fixing system fixed to the outer lower portion of the base, wherein the fixing system is configured to be able to be fixed temporarily to a vehicle, for which the fixing system comprises fixing elements selected from at least one magnet, one suction cup, and combination of both; and wherein the fixing system further comprises adjustable inclination means allowing an adjustable inclination of the device with respect to the vehicle.

In one embodiment, the protective casing is in the shape of an isosceles triangle, wherein the two equal sides of the isosceles triangle form the front portion of the protective casing in which respective removable trims are located, facing each of the ALPR cameras.

In another embodiment based on the preceding embodiment, the portable ALPR device further comprises a video camera located between the ALPR cameras, and a video camera trim. In other words, the video camera and the trim thereof are located on the vertex where the equal sides of the isosceles triangle join together. The video camera is attached to the base of the portable ALPR device by means of a video camera support with adjustable inclination.

In another embodiment, the communication means comprise data communication wiring connectable to an external user device (which is not part of the present invention), and the power supply means comprise power supply wiring connectable to a power supply point of the vehicle. The power supply point of the vehicle is typically the cigarette lighter receptacle of the vehicle or specific power outlets provided in the vehicles.

Alternatively to the preceding embodiment, the communication means comprise a radiofrequency antenna connectable by radiofrequency (Wi-Fi and/or Bluetooth protocols) to an external user device and the power supply means comprise a battery fixed to the base. The battery is located internally covered by the protective casing and is used to supply power to the concentrator and the ALPR cameras and video camera.

In one embodiment, the fixing system which temporarily fixes the ALPR device to the element carrying same, such as a vehicle, comprises:
- an inverted U-shaped upper plate with a central portion from the ends of which two rectangular projections project perpendicular to the central portion and parallel to one another, each of which comprises two threaded holes with respective screw fasteners for fastening to a lower plate going through same;
- the U-shaped lower plate with a central portion from the ends of which two rectangular projections project perpendicular to the central portion and parallel to one another, each of which comprises two holes with respective screw fasteners for fastening to the upper plate going through same.

The lower plate further comprises, in an outer central portion, magnets and suction cups. The adjustable inclination means comprise the holes of the upper and lower plates, as well as the screw fasteners going through said holes. A hole of each rectangular projection of the lower plate is a curved and oblong hole, the curved and oblong hole being located at a constant distance from the other hole of the same projection, allowing the inclination to be adjusted by moving the screw fastener going through the curved and oblong hole. With this configuration, the adjustable inclination means are configured to incline the device between 0° and at least 15°.

In one embodiment of the invention, the ALPR camera support with adjustable inclination comprises a fixed support, which is fixed to the base and pivotably fixed to the ALPR camera by means of respective pivoting screws located on the sides and pivoting about a horizontal axis of rotation of the ALPR camera. The ALPR camera support with adjustable inclination further comprises an adjustable support fixed to the rear portion of the ALPR camera which interacts with the fixed support by means of an adjusting screw, which is configured to incline the ALPR camera a predetermined angle by means of the threading of the adjusting screw onto the fixed support.

In one embodiment of the invention, the video camera support with adjustable inclination which fixes the video camera to the base comprises:
- a U-shaped main plate with a central portion from the ends of which two rectangular projections project perpendicular to the central portion and parallel to one another, with there being arranged at the end of said projections notches on which two side plates pivot; and,
- two side plates, each of which is fixed to each of the side portions of the video camera and wherein one of the side plates is fixed to the main plate by means of an adjusting screw which changes the inclination of the video camera with respect to the main plate by means of the threading of the adjusting screw.

### Brief description of the Figures

Figure 1 shows the portable ALPR device for vehicles with two ALPR cameras located in the front portion of the device and on the inclined sides of the front portion, and a video camera at the end of the front portion and between the ALPR cameras. This embodiment has a handle on the rear portion of the device and wiring for data and power supply interconnection with the vehicle/user.
Figure 2 shows the portable ALPR device for vehicles with two ALPR cameras located in the front portion of the device and on the inclined sides of the front portion, and a video camera at the end of the front portion and between the ALPR cameras. This embodiment has a handle on the rear portion of the device and a radiofrequency antenna on the upper portion of the device for data interconnection with the vehicle/user.
Figure 3 shows the portable ALPR device for vehicles with two ALPR cameras located in the front portion of the device and on the inclined sides of the front portion, but without any video camera at the end of the front portion. This embodiment has a handle on the rear portion of the device and wiring for data and power supply interconnection with the vehicle/user.
Figure 4 shows the portable ALPR device for vehicles with two ALPR cameras located in the front portion of the device and on the inclined sides of the front portion, but without any video camera at the end of the front portion. This embodiment has a handle on the rear portion of the device and a radiofrequency antenna on the upper portion of the device for data interconnection with the vehicle/user.
Figure 5 shows an exploded view of the device shown in Figure 1.
Figure 6 shows an exploded view of the device shown in Figure 2.
Figure 7A shows an exploded view of the ALPR camera and of the ALPR camera support with adjustable inclination.
Figure 7B shows a perspective view of the ALPR camera and of the ALPR camera support with adjustable inclination.
Figure 8A shows an exploded view of the video camera and of the video camera support with adjustable inclination.
Figure 8B shows a perspective view of the video camera and of the video camera support with adjustable inclination.
Figure 9A shows an exploded view of the fixing system for fixing the portable ALPR device to a vehicle.
Figure 9B shows a view of the fixing system for fixing the portable ALPR device to a vehicle between two positions: 0° and 15°.

### Description of an embodiment

### List of references

- 1.: Portable ALPR device;
- 2.: Base of the device;
- 3.: ALPR camera;
- 4.: ALPR camera support with adjustable inclination;

- a.: Fixed support;
- b.: Pivoting screws;
- c.: Adjustable support;
- d.: Adjusting screw;

- 5.: Video camera;
- 6.: Video camera support with adjustable inclination;

- a.: main plate;
- b.: central portion;
- c.: rectangular projections;
- d.: notches of the rectangular projections;
- e.: side plates;
- f.: adjusting screw;

- 7.: Concentrator;
- 8.: Protective casing;
- 9.: Handle;
- 10.: Data communication wiring;
- 11.: Power supply wiring;
- 12.: Radiofrequency antenna: Wi-Fi, Bluetooth;
- 13.: Battery;
- 14.: Magnet;
- 15.: Suction cup;
- 16.: Fixing system;
- 17.: Inverted U-shaped upper plate of the fixing system;

- a.: central portion;
- b.: rectangular projections;

- c.: threaded holes;
- d.: through holes;

- 18.: U-shaped lower plate of the fixing system;

- a.: central portion;
- b.: rectangular projections;
- c.: holes;
- d.: curved and oblong holes;

- 19.: Screw fasteners for fastening the upper plate 17 and the lower plate 18;
- 20.: Removable ALPR camera trim;
- 21.: Removable video camera trim;
- 22.: Extraction strap;
- 23.: Video camera/ALPR camera connectors.

The embodiments of the invention are described below in relation to the figures.

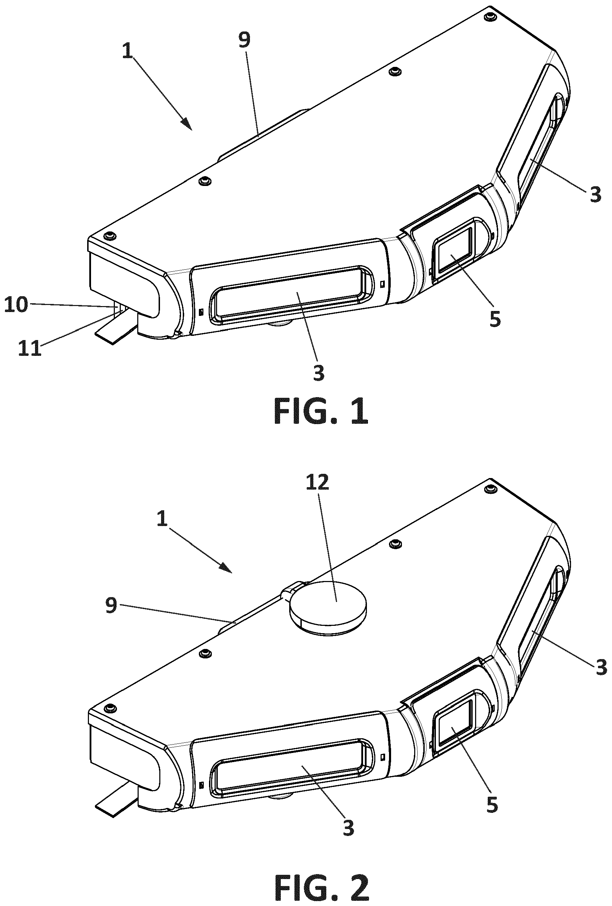

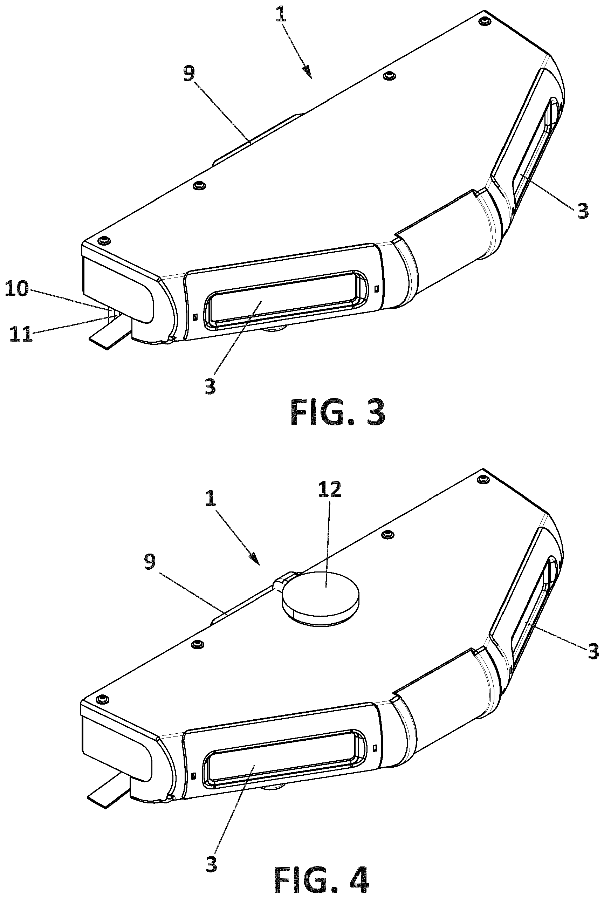

Figure 1 shows the portable ALPR device 1 with wired data and power supply connection for vehicles. The portable ALPR device 1 shown in Figure 1 comprises two ALPR cameras 3 located in the front portion of the device 1 and on the inclined sides of the front portion, and a video camera 5 at the end of the front portion and between the ALPR cameras 3. This embodiment has a handle 9 on the rear portion of the device 1 and wiring for data 10 and power supply 11 interconnection with the vehicle/user (not shown). Figure 3 shows the same ALPR device of Figure 1 without the video camera being located at the end of the free front portion.

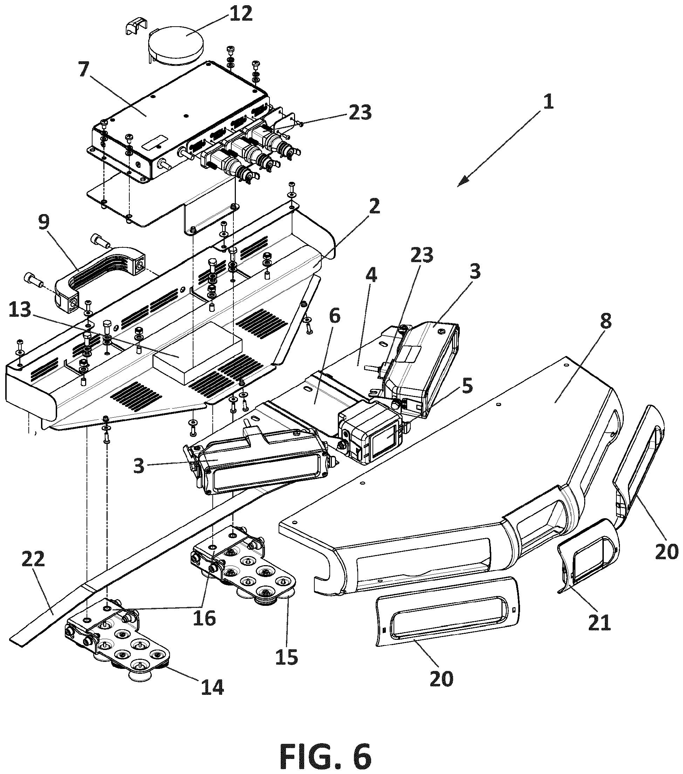

Figure 2 shows the portable ALPR device 1 with wireless data and power supply connection included in the actual device 1 for vehicles. The portable ALPR device 1 shown in Figure 2 comprises two ALPR cameras 3 located in the front portion of the device 1 and on the inclined sides of the front portion, and a video camera 5 at the end of the front portion and between the ALPR cameras 3. This embodiment has a handle 9 on the rear portion of the device 1 and a radiofrequency antenna 12 for data interconnection by means of Wi-Fi and/or Bluetooth. As shown in the exploded view of Figure 6, the power supply of the device 1 is by means of an internal battery 13. Figure 4 shows the same ALPR device of Figure 2 without the video camera being located at the end of the free front portion.

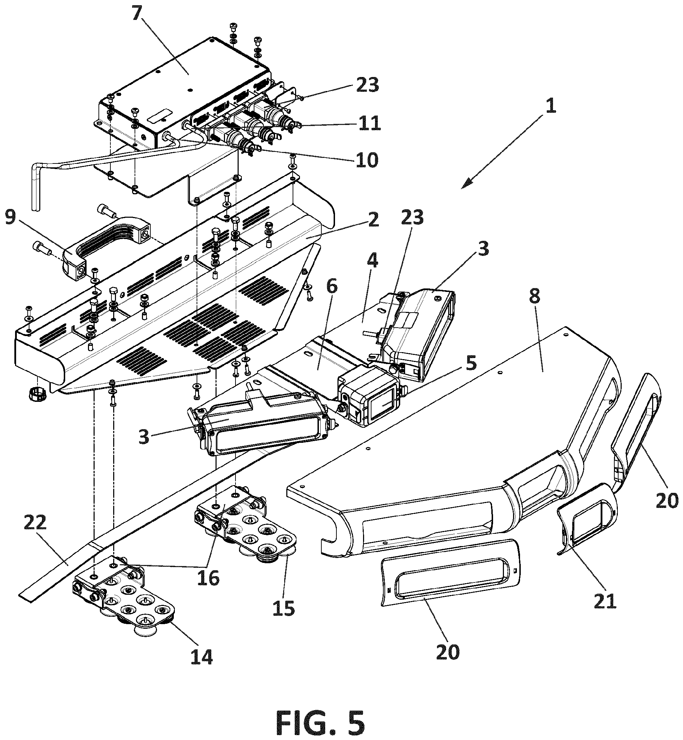

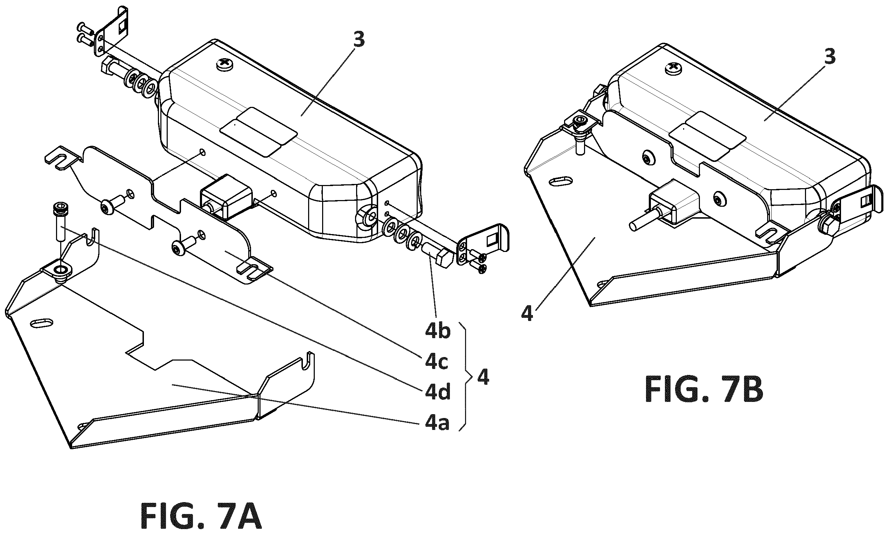

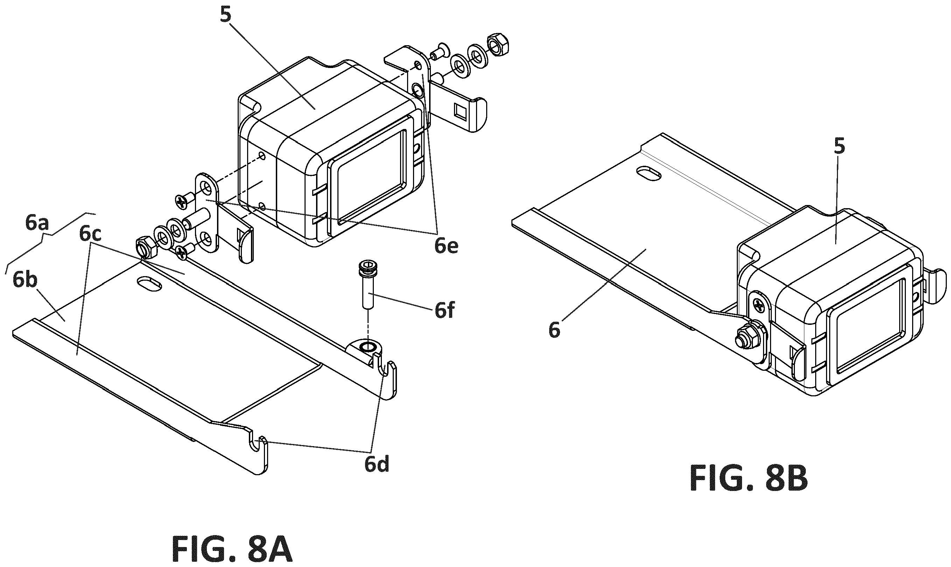

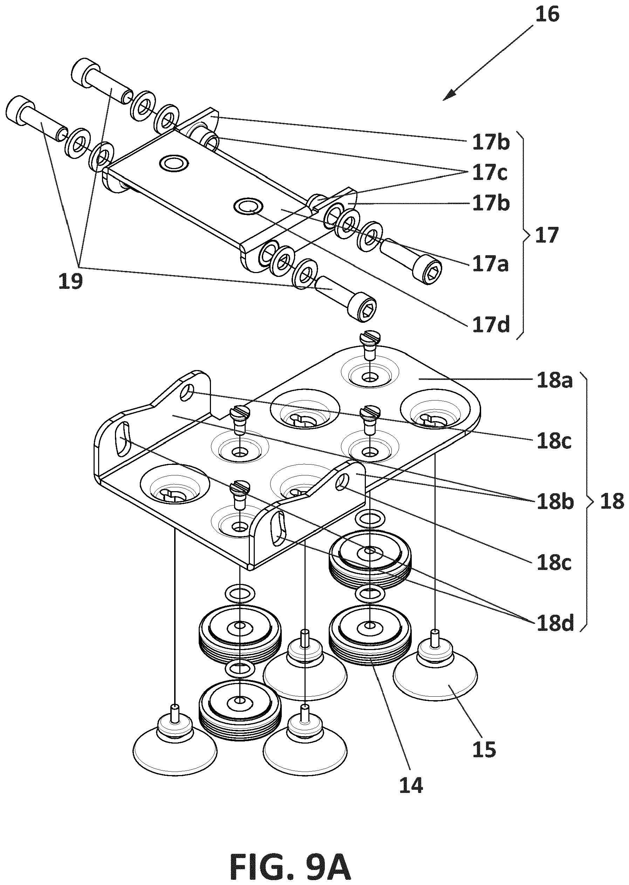

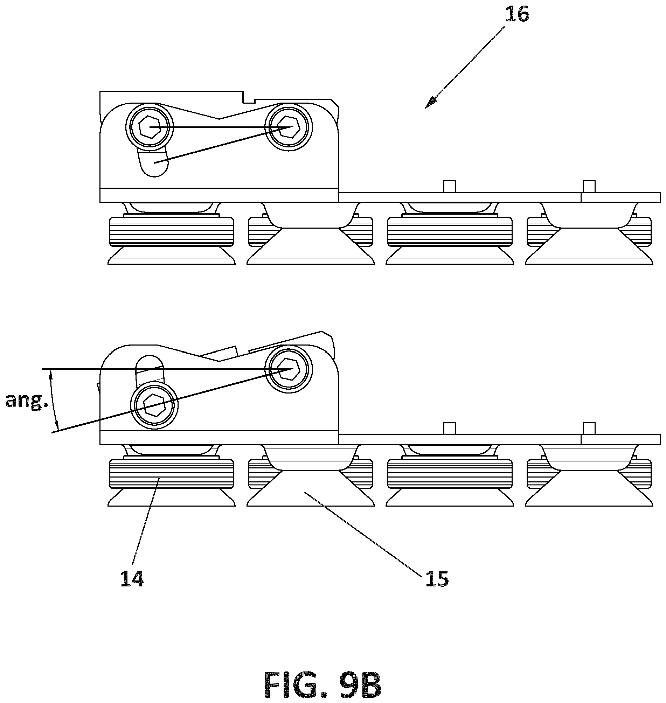

Figure 5 shows an exploded view of the device shown in Figure 1 in which all the components forming the portable ALPR device 1 of the present invention with wired communication and power supply are shown. The portable ALPR device 1 has a base 2 forming the rear lower portion of the device 1. The base 2 forms the "chassis" of the device 1, so the rest of the components of the device 1 are fixed directly or indirectly to the base 2. The rear portion of the base 2 is flat and allows the handle 9 to be fixed on the outer surface of the rear portion. The lower portion of the base 2 is in the shape of an isosceles triangle with a flat termination (point at which the two equal sides thereof are joined together). This isosceles triangle shape with a flat termination allows the front portion of the device 1 to also have that same shape, which allows the ALPR cameras 3 to be placed on the equal sides of the triangle and a video camera 5 to be placed between both ALPR cameras 3 positioned parallel to the rear portion of the base 2. The portable ALPR device 1 has the concentrator 7 which is a processing unit with memory and capacity for connection with the internal elements and the ALPR cameras 3 and the video camera 5 by means of connectors 23, and with the possible external elements such as a vehicle/device of a user (not shown) by means of the data communication wiring 10 and the power supply wiring 11. The portable ALPR device 1 further comprises a complementary protective casing 8 for the base 2. The protective casing 8 has on the front portion thereof the ALPR camera removable trims 20 facing the ALPR cameras 3 to enable accessing same and performing vertical inclination adjustment. The protective casing 8 also has on the front portion thereof the video camera removable trim 21 facing the video camera 5 to enable accessing same and performing vertical inclination adjustment. The ALPR device 1 is universal, i.e., it is applicable for any roof or hood of any vehicle, not only because it is portative or portable, but also because it furthermore has a fixing system 16 (shown in detail in Figures 9A and 9B) allowing the vertical inclination of the entire ALPR device 1 to be adjusted which, along with the adjustment of the vertical inclination of each of the ALPR cameras 3 and the video camera 5, achieves angles of inclination between 0° and 60°, allowing the ALPR device 1 to be able to perform its function of reading license plates, and optionally, recording the surroundings in any type of vehicle with any inclination of the roof thereof or of another portion of the vehicle in which the placement thereof is contemplated. The inclination of the ALPR camera 3 is achieved by means of the ALPR camera support with adjustable inclination 4 which is shown in detail in the Figure 7. The inclination of the video camera 5 is achieved by means of the video camera support with adjustable inclination 6 which is shown in detail in Figure 8. Lastly, the ALPR device 1 has an extraction strap 23 to help separate the device 1 from where it is placed.

Figure 6 shows an exploded view of the device shown in Figure 2 in which all the components forming the portable ALPR device 1 of the present invention with wireless communication and internal power supply are shown. The portable ALPR device 1 of Figure 6 only differs from the ALPR device 1 of Figure 5 in that the device shown in Figure 6 lacks the power supply wiring 11, which is replaced by an internal battery 13 connected to the concentrator 7. A second difference is that the ALPR device 1 of Figure 6 lacks the data communication wiring 10, which is replaced by a radiofrequency antenna 12 connected to the concentrator 7 for standard Wi-Fi and/or Bluetooth connections. The rest of the elements and configuration of the ALPR device 1 shown in Figure 6 coincides with those shown in Figure 5.

Figure 7A shows an exploded view of the ALPR camera 3 and of the ALPR camera support with adjustable inclination 4 in which the elements making up the ALPR camera support with adjustable inclination 4 can be seen in detail. In a complementary manner, Figure 7B shows a perspective view of the ALPR camera 3 and of the ALPR camera support with adjustable inclination 4. As shown in Figure 7A, the ALPR camera support with adjustable inclination 4 comprises the fixed support 4a, which is fixed to the base 2 and pivotably fixed to the ALPR camera 3 by means of the pivoting screws 4b located on the sides of the ALPR camera 3 and on an end portion of the fixed support 4a where notches are located. This configuration allows the horizontal rotation of the ALPR camera 3 about the horizontal axis formed by the pivoting screws 4b between -30° and +30° about the horizontal plane. The ALPR camera support with adjustable inclination 4 further comprises the adjustable support 4c fixed to the rear portion of the ALPR camera 3 which interacts with the fixed support 4a by means of an adjusting screw 4d, which is configured to incline the ALPR camera 3 a predetermined angle by means of the threading of the adjusting screw 4d onto the fixed support 4a.

Figure 8A shows an exploded view of the video camera 5 and of the video camera support with adjustable inclination 6, in which the elements making up the video camera support with adjustable inclination 6 can be seen in detail. In a complementary manner, Figure 8B shows a perspective view of the video camera 5 and of the video camera support with adjustable inclination 6. The video camera support with adjustable inclination 6 fixes the video camera 5 to the base 2 such that it allows the horizontal inclination of the video camera 5 to be adjusted between -30° and +30° about the horizontal plane. To that end, the video camera support with adjustable inclination 6 comprises the main plate 6a and the two side plates 6e. The main plate 6a has a U shape with a central portion 6b from the ends of which two rectangular projections 6c project perpendicular to the central portion and parallel to one another, with there being arranged at the end of said projections notches 6d on which two side plates 6e pivot. With respect to the two side plates 6e, each of them is fixed to each of the side portions of the video camera 5, one of the side plates being fixed to the main plate 6a by means of the adjusting screw 6f changing the inclination of the video camera 5 with respect to the main plate 6a by means of the threading of the adjusting screw 6f.

Figure 9A shows an exploded view of the fixing system 16 for fixing the portable ALPR device 1 to a vehicle. Additionally, Figure 9B shows a side view of the fixing system 16 for fixing the portable ALPR device 1 to a vehicle between two positions: 0° and 15°. As shown in Figure 9A, the fixing system 16 comprises the upper plate 17 and the lower plate 18 attached to one another by the screw fasteners 19. The upper plate 17 has an inverted U shape with a central portion 17a from the ends of which the two rectangular projections 17b project perpendicular to the central portion and parallel to one another. Each of the two rectangular projections 17b has two threaded holes 17c with corresponding screw fasteners 19 going through same and threaded therethrough. The U-shaped lower plate 18 has the central portion 18a from the ends of which two rectangular projections 18b project perpendicular to the central portion and parallel to one another. Each of the two rectangular projections 18b has two holes 18c and 18d with the screw fasteners 19 going through same to be threaded onto the upper plate 17. Fixing to the vehicle (not shown) is performed with magnets 14 and suction cups 15, whereas the attachment of the fixing system 16 with the base 2 is performed by means of screws going through the holes 17d of the upper plate 17. Therefore, the lower plate 18 has, in an outer central portion, magnets 14 and suction cups 15. The complete inclination of the ALPR device 1 is therefore determined by the inclination between the upper plate 17 and the lower plate 18. This inclination is independent of the adjustments of the ALPR cameras 3 and the video camera 5, where combined values of -45° and 45° degrees with respect to the horizontal plane can be achieved. The adjustment of the upper plate 17 with respect to the lower plate 18 is achieved by means of the special configuration of the holes 17c of the upper plate and the holes 18c, 18d of the lower plate, as well as the screw fasteners 19 going through the holes 17c, 18c, 18d. The hole 18d of each rectangular projection of the lower plate is a hole with a curved and oblong shape, which is located at a constant distance from the other hole 18c of the same projection, allowing the inclination to be adjusted by means of moving the screw fastener 19 going through the oblong hole 18d.

## Claims

1. A portable ALPR device (1) **characterised in that** it comprises:
• a base (2);
• two ALPR cameras (3);
• an ALPR camera support with adjustable inclination (4) for each ALPR camera (3), fixing the ALPR camera (3) to the base (2);
• a concentrator (7) connected to at least the ALPR cameras (3);
• communication means (10, 12) connected to the concentrator (7);
• power supply means (11, 13) connected to the concentrator (7);
• a protective casing (8) on the front portion of the device (1), fixed to the base (2) for internally covering at least the ALPR cameras (3) and the concentrator (7);
• a handle (9) fixed to the base (2) and located on the outer rear portion of the device (1);
• a fixing system (16) fixed to the outer lower portion of the base (2), wherein the fixing system (16) is configured to be able to be fixed temporarily to a vehicle, for which the fixing system (16) comprises fixing elements selected from at least one magnet (14), one suction cup (15), and combination of both; and wherein the fixing system (16) further comprises adjustable inclination means (17c, 18c, 18d, 19) allowing an adjustable inclination of the device with respect to the vehicle.

2. The portable ALPR device (1) according to claim 1, wherein the protective casing (8) is in the shape of an isosceles triangle, wherein the two equal sides of the isosceles triangle form the front portion of the protective casing (8) in which respective removable trims (20) are located, facing each of the ALPR cameras (3).

3. The portable ALPR device (1) according to claim 2, wherein it further comprises a video camera (5) located between the ALPR cameras (3), and a video camera trim (21).

4. The portable ALPR device (1) according to claim 1, wherein the communication means comprise data communication wiring (10) connectable to an external user device, and the power supply means comprise power supply wiring (11) connectable to a power supply point of the vehicle.

5. The portable ALPR device (1) according to claim 1, wherein the communication means comprise a radiofrequency antenna (12) connectable by radiofrequency to an external user device, and the power supply means comprise a battery (13) fixed to the base (2).

6. The portable ALPR device (1) according to claim 1, wherein the fixing system (16) comprises:
• an inverted U-shaped upper plate (17) with a central portion (17a) from the ends of which two rectangular projections (17b) project perpendicular to the central portion and parallel to one another, each of which comprises two threaded holes (17c) with respective screw fasteners (19) for fastening to a lower plate (18) going through same;
• the U-shaped lower plate (18) with a central portion (18a) from the ends of which two rectangular projections (18b) project perpendicular to the central portion and parallel to one another, each of which comprises two holes (18c, 18d) with respective screw fasteners (19) for fastening to the upper plate (17) going through same;
wherein the lower plate (18) further comprises, in an outer central portion, magnets (14) and suction cups (15); and wherein the adjustable inclination means (17c, 18c, 18d, 19) comprise the holes (17c) of the upper plate and the holes (18c, 18d) of the lower plate, as well as the screw fasteners (19) going through said holes (17c, 18c, 18d), wherein a hole of each rectangular projection of the lower plate is a curved and oblong hole (18d), and wherein said curved and oblong hole (18d) is located at a constant distance from the other hole (18c) of the same projection, allowing the inclination to be adjusted by moving the screw fastener (19) going through the curved and oblong hole (18d).

7. The portable ALPR device (1) according to claim 6, wherein the adjustable inclination means (17c, 18c, 18d, 19) are configured to incline the device between 0° and at least 15°.

8. The portable ALPR device (1) according to claim 1, wherein the ALPR camera support with adjustable inclination (4) comprises a fixed support (4a), which is fixed to the base (2) and pivotably fixed to the ALPR camera (3) by means of respective pivoting screws (4b) located on the sides and pivoting about a horizontal axis of rotation of the ALPR camera (3); the ALPR camera support with adjustable inclination (4) further comprises an adjustable support (4c) fixed to the rear portion of the ALPR camera (3) which interacts with the fixed support (4a) by means of an adjusting screw (4d), which is configured to incline the ALPR camera (3) a predetermined angle by means of the threading of the adjusting screw (4d) onto the fixed support (4a).

9. The portable ALPR device (1) according to claim 3, wherein it further comprises a video camera support with adjustable inclination (6) which fixes the video camera (5) to the base (2); the video camera support with adjustable inclination (6) comprises:
• a U-shaped main plate (6a) with a central portion (6b) from the ends of which two rectangular projections (6c) project perpendicular to the central portion and parallel to one another, with there being arranged at the end of said projections notches (6d) on which two side plates (6e) pivot;
• two side plates (6e), each of which is fixed to each of the side portions of the video camera (5) and wherein one of the side plates is fixed to the main plate (6a) by means of an adjusting screw (6f) which changes the inclination of the video camera (5) with respect to the main plate (6a) by means of the threading of said adjusting screw.

## Patentansprüche

1. Tragbare ALPR (Automatic License Plate Recognition - Automatische Kfz-Kennzeichenerkennung) Vorrichtung (1), **dadurch gekennzeichnet, dass** sie umfasst:
- eine Basis (2);
- zwei ALPR Kameras (3);
- eine ALPR Kamerahalterung mit einstellbarer Neigung (4) für jede ALPR Kamera (3), die die ALPR Kamera (3) an der Basis (2) fixiert;
- einen Konzentrator (7), der mit wenigstens den ALPR Kameras (3) verbunden ist;
- eine Kommunikationseinrichtung (10, 12), die mit dem Konzentrator (7) verbunden ist;
- eine Stromversorgungseinrichtung (11, 13), die mit dem Konzentrator (7) verbunden ist;
- ein Schutzgehäuse (8) am vorderen Teil der Vorrichtung (1), das an der Basis (2) fixiert ist, um wenigstens die ALPR Kameras (3) und den Konzentrator (7) intern abzudecken;
- einen Griff (9), der an der Basis (2) fixiert ist und sich am äußeren hinteren Teil der Vorrichtung (1) befindet:
- ein Fixierungssystem (16), das an dem äußeren unteren Teil der Basis (2) fixiert ist, wobei das Fixierungssystem (16) so konfiguriert ist, dass es vorübergehend an einem Fahrzeug fixiert sein kann, wofür das Fixierungssystem (16) Fixierungselemente umfasst, die aus wenigstens einem Magneten (14), einem Saugnapf (15) oder einer Kombination aus beiden ausgewählt sind, und wobei das Fixierungssystem (16) des Weiteren eine einstellbare Neigungseinrichtung (17c, 18c, 18d, 19) umfasst, die eine einstellbare Neigung der Vorrichtung mit Bezug auf das Fahrzeug ermöglicht.

2. Tragbare ALPR Vorrichtung (1) nach Anspruch 1, wobei das Schutzgehäuse (8) die Form eines gleichschenkligen Dreiecks hat, wobei die beiden gleichen Seiten des gleichschenkligen Dreiecks den vorderen Teil des Schutzgehäuses (8) bilden, in dem sich jeweilige abnehmbare Blenden (20) befinden, die jeweils den ALPR Kameras (3) zugewandt sind.

3. Tragbare ALPR Vorrichtung (1) nach Anspruch 2, wobei sie des Weiteren eine Videokamera (5), die sich zwischen den ALPR Kameras (3) befindet, und eine Videokamerablende (21) umfasst.

4. Tragbare ALPR Vorrichtung (1) nach Anspruch 1, wobei die Kommunikationseinrichtung eine Datenkommunikationsverkabelung (10) umfasst, die mit einem externen Benutzergerät verbindbar ist, und die Stromversorgungseinrichtung eine Stromversorgungsverkabelung (11) umfasst, die mit einem Stromversorgungsanschluss des Fahrzeugs verbindbar ist.

5. Tragbare ALPR Vorrichtung (1) nach Anspruch 1, wobei die Kommunikationseinrichtung eine Hochfrequenzantenne (12) umfasst, die durch Hochfrequenz mit einem externen Benutzergerät verbindbar ist, und die Stromversorgungseinrichtung eine Batterie umfasst, die an der Basis fixiert ist.

6. Tragbare ALPR Vorrichtung (1) nach Anspruch 1, wobei das Fixierungssystem (16) umfasst:
- eine umgedrehte U-förmige obere Platte (17) mit einem Mittelteil (17a), von dessen Enden zwei rechtwinklige Vorsprünge (17b) rechtwinklig zum Mittelteil und parallel zueinander vorstehen, die jeweils zwei Gewindelöcher (17c) mit jeweiligen Schraubbefestigungen (19) zum Befestigen an einer unteren Platte (18) umfassen, die durch diese hindurchführen;
- die U-förmige untere Platte (18) mit einem Mittelteil (18a), von dessen Enden zwei rechtwinklige Vorsprünge (18b) rechtwinklig zu dem Mittelteil und parallel zueinander vorstehen, die jeweils zwei Löcher (18c, 18d) mit jeweiligen Schraubbefestigungen (19) zum Befestigen an der oberen Platte (17) umfassen, die durch diese hindurchführen;
wobei die untere Platte (18) des Weiteren in einem äußeren Mittelteil Magnete (14) und Saugnäpfe (15) umfasst und wobei die einstellbare Neigungseinrichtung (17c, 18c, 18d, 19) die Löcher (17c) der oberen Platte und die Löcher (18c, 18d) der unteren Platte sowie die durch die Löcher (17c, 18c, 18d) hindurchführenden Schraubbefestigungen (19) umfasst, wobei ein Loch von jedem rechtwinkligen Vorsprung der unteren Platte ein bogenförmiges und längliches Loch (18d) ist, und wobei sich das bogenförmige und längliche Loch (18d) in einem konstanten Abstand von dem anderen Loch (18C) des gleichen Vorsprungs befindet, wobei das Einstellen der Neigung durch Bewegen der durch das bogenförmige und längliche Loch (18d) führenden Schraubbefestigung (19) ermöglicht wird.

7. Tragbare ALPR Vorrichtung (1) nach Anspruch 6, wobei die einstellbare Neigungseinrichtung (17c, 18c, 18d, 19) konfiguriert sind, um die Vorrichtung zwischen 0° und wenigstens 15° zu neigen.

8. Tragbare ALPR Vorrichtung (1) nach Anspruch 1, wobei die ALPR Kamerahalterung mit einstellbarer Neigung (4) eine feste Halterung (4a) umfasst, die an der Basis (2) fixiert ist und an der ALPR Kamera (3) mithilfe jeweiliger Schwenkschrauben (4b) schwenkbar fixiert ist, die sich an den Seiten befinden und um eine horizontale Drehachse der ALPR Kamera (3) geschwenkt werden; wobei die ALPR Kamerahalterung mit einstellbarer Neigung (4) des Weiteren eine einstellbare Halterung (4c) umfasst, die am hinteren Teil der ALPR Kamera (3) fixiert ist und mit der festen Halterung (4a) mithilfe einer Einstellschraube (4d) zusammenwirkt, die konfiguriert ist, um die ALPR Kamera (3) durch das Einschrauben der Einstellschraube (4d) in die feste Halterung (4a) um einen vorgegebenen Winkel zu neigen.

9. Tragbare ALPR Vorrichtung (1) nach Anspruch 3, wobei sie des Weiteren eine Videokamerahalterung mit einstellbarer Neigung (6) umfasst, die die Videokamera (5) an der Basis (2) fixiert; wobei die Videokamerahalterung mit einstellbarer Neigung (6) umfasst:
- eine U-förmige Hauptplatte (6a) mit einem Mittelteil (6b), von dessen Enden zwei rechtwinklige Vorsprünge (6c) rechtwinklig zum Mittelteil und parallel zueinander vorstehen, wobei am Ende der Vorsprünge Kerben (6d) angeordnet sind, an denen zwei Seitenplatten (6e) schwenken;
- zwei Seitenplatten (6e), von denen jede an den jeweiligen Seitenteilen der Videokamera (5) fixiert ist und wobei eine der Seitenplatten an der Hauptplatte (6a) mithilfe einer Einstellschraube (6f) fixiert ist, die die Neigung der Videokamera (5) mit Bezug auf die Hauptplatte (6a) durch das Einschrauben der Einstellschraube verändert.

## Revendications

1. Dispositif ALPR portable (1), **caractérisé en ce qu'**il comprend :
• une base (2) ;
• deux caméras ALPR (3) ;
• un support de caméra ALPR avec inclinaison ajustable (4) pour chaque caméra ALPR (3), fixant la caméra ALPR (3) à la base (2) ;
• un concentrateur (7) raccordé au moins aux caméras ALPR (3) ;
• un moyen de communication (10, 12) raccordé au concentrateur (7) ;
• un moyen d'alimentation d'énergie (11, 13) raccordé au concentrateur (7) ;
• un boîtier de protection (8) sur la partie avant du dispositif (1), fixé sur la base (2) pour recouvrir intérieurement au moins les caméras ALPR (3) et le concentrateur (7) ;
• une poignée (9) fixée à la base (2) et positionnée sur la partie arrière externe du dispositif (1) ;
• un système de fixation (16) fixé sur la partie inférieure externe de la base (2),
dans lequel le système de fixation (16) est configuré pour pouvoir être fixé temporairement à un véhicule, pour lequel le système de fixation (16) comprend des éléments de fixation sélectionnés parmi au moins un aimant (14), une ventouse (15) et la combinaison des deux ; et dans lequel le système de fixation (16) comprend en outre un moyen d'inclinaison ajustable (17c, 18c, 18d, 19) permettant une inclinaison ajustable du dispositif par rapport au véhicule.

2. Dispositif ALPR portable (1) selon la revendication 1, dans lequel le boîtier de protection (8) se présente sous la forme d'un triangle isocèle, dans lequel les deux côtés égaux du triangle isocèle forment la partie avant du boîtier de protection (8) dans lequel sont positionnées des garnitures amovibles (20) respectives, faisant face à chacune des caméras ALPR (3).

3. Dispositif ALPR portable (1) selon la revendication 2, dans lequel il comprend en outre une caméra vidéo (5) positionnée entre les caméras ALPR (3) et une garniture de caméra vidéo (21).

4. Dispositif ALPR portable (1) selon la revendication 1, dans lequel les moyens de communication comprennent un câblage de communication de données (10) pouvant être raccordé à un dispositif utilisateur externe, et les moyens d'alimentation d'énergie comprennent le câblage d'alimentation d'énergie (11) pouvant être raccordé à un point d'alimentation d'énergie du véhicule.

5. Dispositif ALPR portable (1) selon la revendication 1, dans lequel les moyens de communication comprennent une antenne radiofréquence (12) pouvant être raccordée par radiofréquence à un dispositif utilisateur externe, et les moyens d'alimentation d'énergie comprennent une batterie (13) fixée à la base (2).

6. Dispositif ALPR portable (1) selon la revendication 1, dans lequel le système de fixation (16) comprend :
• une plaque supérieure en forme de U inversé (17) avec une partie centrale (17a) à partir des extrémités de laquelle deux saillies rectangulaires (17b) font saillie perpendiculairement à la partie centrale et parallèlement entre elles, dont chacune comprend deux trous filetés (17c) avec des fixations à vis (19) respectives pour se fixer à une plaque inférieure (18) en passant par ces derniers ;
• la plaque inférieure en forme de U (18) avec une partie centrale (18a) à partir des extrémités de laquelle deux saillies rectangulaires (18b) font saillie perpendiculairement à la partie centrale et parallèlement entre elles, dont chacune comprend deux trous (18c, 18d) avec des fixations à vis (19) respectives pour se fixer à la plaque supérieure (17) en passant par ces derniers ;
dans lequel la plaque inférieure (18) comprend en outre, dans une partie centrale externe, des aimants (14) et des ventouses (15) ; et dans lequel les moyens d'inclinaison ajustable (17c, 18c, 18d, 19) comprennent les trous (17c) de la plaque supérieure et les trous (18c, 18d) de la plaque inférieure, ainsi que les fixations à vis (19) passant à travers lesdits trous (17c, 18c, 18d), dans lequel un trou de chaque saillie rectangulaire de la plaque inférieure est un trou courbe et oblong (18d), et dans lequel ledit trou courbe et oblong (18d) est positionné à une distance constante de l'autre trou (18c) de la même saillie, permettant d'ajuster l'inclinaison en déplaçant la fixation à vis (19) passant à travers le trou courbe et oblong (18d).

7. Dispositif ALPR portable (1) selon la revendication 6, dans lequel les moyens d'inclinaison ajustable (17c, 18c, 18d, 19) sont configurés pour incliner le dispositif entre 0° et au moins 15°.

8. Dispositif ALPR portable (1) selon la revendication 1, dans lequel le support de caméra ALPR avec inclinaison ajustable (4) comprend un support fixe (4a) qui est fixé sur la base (2) et fixé, de manière pivotante, à la caméra ALPR (3) au moyen de vis de pivotement (4b) respectives positionnées sur les côtés et pivotant autour d'un axe de rotation horizontal de la caméra ALPR (3) ; le support de caméra ALPR avec inclinaison ajustable (4) comprend en outre un support ajustable (4c) fixé sur la partie arrière de la caméra ALPR (3) qui interagit avec le support fixe (4a) au moyen d'une vis d'ajustement (4d), qui est configurée pour incliner la caméra ALPR (3) à un angle prédéterminé au moyen du filetage de la vis d'ajustement (4d) sur le support fixe (4a).

9. Dispositif ALPR portable (1) selon la revendication 3, dans lequel il comprend en outre un support de caméra vidéo avec inclinaison ajustable (6) qui fixe la caméra vidéo (5) sur la base (2) ; le support de caméra vidéo avec inclinaison ajustable (6) comprend :
• une plaque principale en forme de U (6a) avec une partie centrale (6b) à partir des extrémités de laquelle, deux saillies rectangulaires (6c) font saillie perpendiculairement à la partie centrale et parallèlement entre elles, avec cela, on agence à l'extrémité desdites saillies, des encoches (6d) sur lesquelles deux plaques latérales (6e) pivotent ;
• deux plaques latérales (6e), dont chacune est fixée sur chacune des parties latérales de la caméra vidéo (5) et dans lequel l'une des plaques latérales est fixée sur la plaque principale (6a) au moyen d'une vis d'ajustement (6f) qui modifie l'inclinaison de la caméra vidéo (5) par rapport à la plaque principale (6a) au moyen du filetage de ladite vis d'ajustement.
